# EUROPEAN PATENT SPECIFICATION

(11) **EP 4 240 207 B1**
(45) Date of publication and mention of the grant of the patent: **02.04.2025**
(21) Application number: 21810738.1
(22) Date of filing: 04.11.2021
(51) Int. Cl.: A47B 96/06, F16B 12/20

(54) **PIECE OF FURNITURE WITH MAGNETIC SHELF BRACKET FOR THE REMOVABLE CONNECTION OF SHELVES TO SHOULDERS**
MÖBELSTÜCK MIT MAGNETISCHE REGALKONSOLE ZUR LÖSBAREN VERBINDUNG VON REGALEN MIT SCHULTERN
MEUBLE AVEC SUPPORT D'ÉTAGÈRE MAGNÉTIQUE POUR LA LIAISON AMOVIBLE D'ÉTAGÈRES AUX ÉPAULEMENTS

(30) Priority: 06.11.2020 IT 202000026563
(43) Date of publication of application: 13.09.2023
(73) Proprietor: LEONARDO S.r.l., 22060 Figino Serenza (CO) (IT)
(72) Inventor: CATTANEO, Carlo, 22060 Figino Serenza (CO) (IT)
(74) Representative: Dragotti & Associati S.R.L.
(86) International application number: PCT/IB2021/060201
(87) International publication number: WO 2022/097056

(56) References cited:
- EP-A1- 1 228 721
- DE-A1- 102009 060 456
- US-A- 4 848 812

## Description

### FIELD OF THE INVENTION

The present invention relates to a shelf-supporting device for the reversible and easily removable connection of a shelf to the opposite shoulders of a piece of furniture.

The device according to the present invention responds to the need, felt in the sector, for being able to provide furniture shelves with supporting devices that create a connection with the shoulders of an increasingly miniaturized piece of furniture, so as to minimize the aesthetic impact and possibly disappearing completely from sight when the shelf is assembled.

Even more specifically, the shelf-supporting device according to the present invention allows any hole on the surfaces of the shelf itself to be completely eliminated.

### STATE OF THE ART

Devices of the type considered herein for the reversible connection of a shelf to the shoulders of a piece of furniture are known in the field, and are commonly called shelf brackets. They are configured for being completely inserted within the thickness of the shelf itself, and have the function of stably but removably supporting and fixing the substantially horizontal shelf of a piece of furniture between two vertical elements of the piece of furniture itself, commonly called shoulders. Said shelves and said shoulders are substantially arranged perpendicular to each other.

The document DE 102009060456 discloses joining means to detachably join adjacent components, furniture or parts thereof with two coupling elements comprising a pin and a receptacle for said pin wherein said coupling elements under influence of a temporary magnetic field actuation from outside of the joining means (1) interact with the actuation of the magnetic field, being the pin movable between a fixation position and a pre-position.

The document US 4,848,812 discloses a device for selectively locking a door in a closed position against a door frame member. A magnetic bolt is disposed within the throughbore for slidable movement between a retracted position and an extended position in which a portion of the bolt extends outwardly.

The same Applicant has proposed various technical solutions for improving the shelf-supporting devices of the known type, such as those object of Italian patent applications nr. 102019000013428, nr. 102019000016247 and nr. 102019000016343.

Not even these solutions however are without drawbacks.

In particular, one drawback consists in the fact that the shelf brackets of the known type are not completely invisible when, with the device assembled, the shelf is viewed from above or below, and consequently do not limit the aesthetic impact on the furniture.

More specifically, known devices require the creation of holes in the lower surface and/or in the upper surface of the shelf itself to allow access to the device by means of a tool.

Furthermore, the devices of the known type have proved to be relatively expensive to manufacture, also requiring the use of a manoeuvring tool that must be inserted into a hole formed in the shelf to allow the actuation of means for moving the pin provided in the device. This manoeuvre may not always be easy, and in any case requires locating the hole which should be as small as possible to limit its aesthetic impact. Locating the hole and inserting the tool, especially when the sides of the furniture are already assembled and the operator must intervene on the shelf brackets that are positioned towards the bottom panel of the furniture, is not a simple operation

### SUMMARY OF THE INVENTION

In the light of what is specified above, the undertaking of the present invention is to solve the drawbacks affecting shelf-supporting devices known in the state of the art.

Within this undertaking, the objective of the present invention is to provide a shelf-supporting device which has a minimum aesthetic impact and which at the same time allows an easy and fast assembly and disassembly of the shelf with respect to the shoulders.

An objective of the present invention is also to provide a supporting and fixing device for shelves that is more versatile in the design and installation phase of the furniture, in particular as it is able to minimize, if not completely cancel, the aesthetic impact, proving to be invisible both when used with shelves destined for being seen from above by the user, and with shelves destined for being seen from below, allowing any trace of the presence of the device and even the access holes for the tool to be completely eliminated from sight.

The above-mentioned undertaking, as also the above-mentioned objectives and others that will appear more evident hereunder, are achieved by a shelf-supporting device for furniture for the reversible connection of a shelf to the shoulders of a piece of furniture according to the enclosed claim 1.

Further characteristics of the preferred embodiments of the device according to the present invention described in the present application are object of the dependent claims.

### LIST OF FIGURES

Further characteristics and advantages will become more evident from the description of a preferred but non-exclusive embodiment of the shelf-supporting device for furniture for the reversible connection of a shelf to the shoulders of a piece of furniture illustrated by way of non-limiting example with the aid of the attached drawings in which:
figures 1 and 2 show exploded perspective views of a first embodiment of the shelf-supporting device according to the invention;
figure 3 shows a sectional view from above with a horizontal sectional plane of the shelf-supporting device according to figures 1 and 2;
figure 4 shows a view from above of the shelf-supporting device according to a first embodiment of the present invention;
figure 5 shows a raised side view of the shelf-supporting device according to figure 4;
figure 6 shows a sectional view with a longitudinal vertical plane of the shelf-supporting device of figure 5;
figure 7 shows a front view of the shelf-supporting device of figure 5;
figures 8 and 9 show exploded perspective views of a second embodiment of the shelf-supporting device according to the invention;
figures 10 and 11 show the shelf-supporting device of figures 8 and 9 respectively in a blocked position of the device with the pin retracted in the non-operating position, and with the device released with the pin advanced in the operating position;
figures 12 and 13 show sectional side views with a vertical plane of a first variant of the device according to the present invention respectively in an operating condition in which the pin of the device allows the connection of the shelf to a shoulder of a piece of furniture, and in a non-operating condition in which the pin of the device is retracted in the non-operating position by means of the magnetic interaction with said shelf bracket by an external actuation device;
figures 14 and 15 show sectional side views with a vertical plane of a second variant of the device according to the present invention, respectively in an operating condition in which the pin of the device allows the connection of the shelf to a shoulder of a piece of furniture, and in a non-operating condition in which the pin of the device is retracted in the non-operating position by means of the magnetic interaction with said shelf bracket by an external actuation device;
figure 16 shows in a simplified way the assembly steps of a shelf provided with the shelf-supporting device according to the present invention onto the opposite shoulders of a piece of furniture.

### DETAILED DESCRIPTION OF THE INVENTION

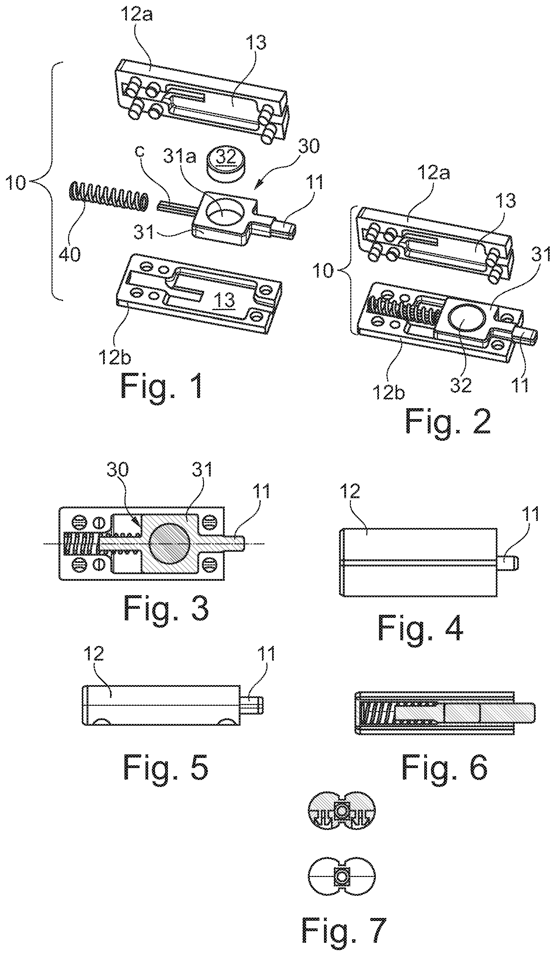

With particular reference to the attached figures 1 to 15, alternative embodiments are described of a shelf-supporting device 10, 10' for supporting furniture shelves suitable for creating the reversible connection of a shelf 100 to the opposite shoulders 200 of a piece of furniture.

The supporting device 10, 10' according to the present invention is of the type suitable for creating a connection by means of a pin 11 associated with the shelf 100 and configured for protruding from the transverse edge B of said shelf 100 so as to be inserted into a corresponding hole or housing seat 201 formed on the shoulder 200 of a piece of furniture.

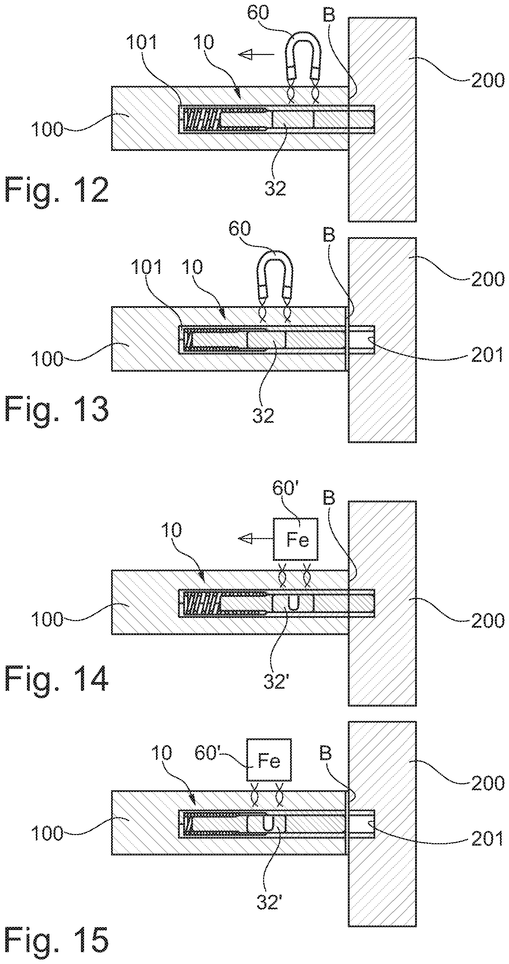

The shelf-supporting device 10, 10' for the reversible connection according to the present invention is configured for being inserted into a seat 101 formed within the thickness of said shelf 100 and comprises a main body 12, advantageously composed of two coupled half-shells 12a, 12b, with which a connection pin 11 is slidingly associated, movable between an advanced operating position in which said pin 11 protrudes from said shelf 100, according to what can be seen for example in figures 12 and 14, so as to be able to be inserted into a housing seat 201 formed on one of said shoulders 200, and a retracted non-operating position wherein the pin 11 does not protrude from said shelf 100, or protrudes so as to be able to be in any case released from said housing seat 201, for example by pushing the shelf itself upwards.

The device 10, 10' according to the present invention is characterized in that the pin 11 is associated with axial movement means 30 of said pin 11 which can be actuated by the user by means of the magnetic interaction between the movement means 30 themselves and an external actuation device 60, 60' that the user can move with respect to the main body 12 of the shelf bracket 10, 10'.

The axial movement means 30 of the pin 11 advantageously comprise at least a part or an insert 32 made of metallic material capable of interacting with the magnetic field generated by an external actuation device 60 comprising a magnet.

In accordance with an alternative embodiment of the shelf-supporting device according to the present invention, the means 30 for moving the pin 11 comprise at least a part or an insert comprising a magnet 32', capable of interacting with the magnetic field generated by a external actuation device 60' made of metallic material.

The axial movement means 30 of the pin 11 preferably comprise a slide 31 slidingly inserted in a housing seat 13 formed within said main body 12, and said slide 31 comprises a seat 31a for housing said at least a part or insert 32 made of metallic material or said at least one magnet 32'.

The shelf-supporting device 10, 10' according to the present invention preferably further comprises elastic means 40 acting between said slide 31 and said main body 12, configured for keeping the pin 11 in the forward position, so that the opposing action of the elastic means 40 must be overcome in order to withdraw said pin 11.

Said elastic means preferably comprise a helical spring 40 acting between said slide 31 and said main body 12 along the axial movement direction X of the pin 11.

Said slide 31 advantageously has a substantially rectangular configuration and in an opposite position with respect to the pin 11, i.e. from the opposite side from which the pin 11 extends, a shank C extends coaxially with respect to the pin 11 along the direction X.

The helical spring 40 is partially fitted onto said shank C.

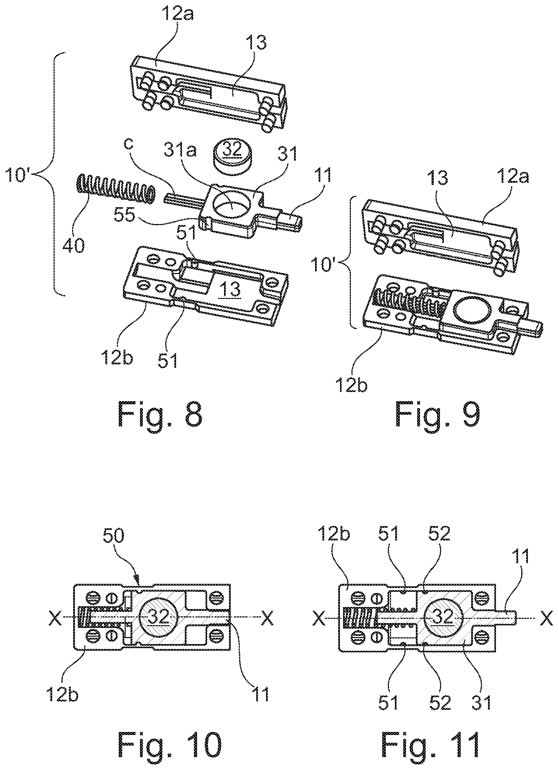

According to a preferred embodiment of the present invention, the shelf-supporting device 10' further comprises retaining means 50 capable of keeping the pin 11 in the retracted position against the action of said elastic means 40, as can be seen for example in figure 10.

Said retaining means 50 can be advantageously released by the user by moving the pin itself or the axial movement means 30 of the pin 11 by means of said external actuation device 60, 60'.

According to a preferred embodiment shown in figures 8 to 11, the retaining means 50 advantageously comprise one or more teeth 51 provided on said main body 12, in particular on the internal side surface of said housing seat 13 of the slide 31, configured for being inserted into corresponding seats 52 formed on said slide 31, advantageously in correspondence with the side surfaces of the body of the slide 31.

The configuration of the device, and in particular of the retaining means 50 and elastic means 40, is advantageously such that when the device is blocked with the pin in the retracted position as shown in figure 10, an external action by the user involving the disengagement of the retaining means 50 is sufficient for releasing the device and causing the slide 31 and the pin 11 to advance into an operating position.

In particular, when the device is blocked in the retracted position of the pin 11 and of the slide 31 as shown in figure 10, it is sufficient to move the slide 31 from the outside by means of the external actuation device 60, 60' causing the retraction or advancement of the slide 31 in order to release the retaining means 50.

The elastic means 40 are advantageously dimensioned so that once the retaining means 50 have been released, the slide 31 is pushed by the elastic means 40 into the advanced operating position shown in figure 11.

The force exerted by the elastic means 40 is preferably such as to cause the slide 31 to move forward causing the teeth 51 to pass beyond the seats 52 so that a retraction of the slide 31 can also cause the release of the retaining means 50 and the movement of the pin 11 from its non-operating position to an operating position.

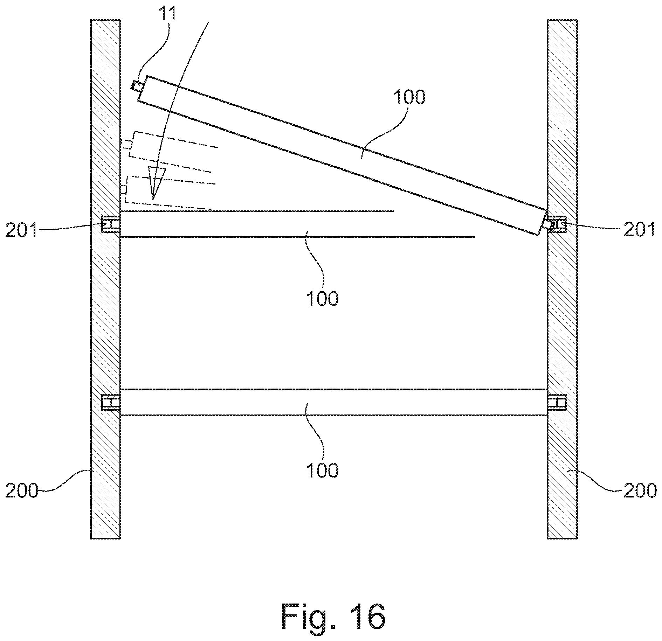

As shown in the operating sequence of figure 16, the engagement of the shelf bracket 10, 10' inserted in the shelf 100 with the seats 201 formed in the shoulders 200 of the furniture can be effected by simply guiding the positioning of the pins 11 in correspondence with the seats 201 as shown, the action of the elastic means 40 will cause the automatic insertion of the pin 11 into the seat 201.

With reference to figures 12 to 15, once the shelf 100 with the device 10, 10' according to the present invention has been coupled with a shoulder 200, in order to remove the shelf, it is sufficient for the operator to bring the external actuation device 60, 60' towards the shelf bracket 10, 10', from below or from above, and move said actuation device away from the shoulders, as indicated by the arrow in figures 12 and 15, causing the slide 31 with which said at least a part or insert 32 made of metallic material or said at least one magnet 32' is respectively associated, to withdraw.

The objectives indicated in the preamble of the present description have thus been achieved, namely for providing a reversible shelf bracket, practically invisible from the outside, which can be actuated without the use of any manoeuvring tool and which therefore does not require the creation of holes for allowing the manoeuvring tool to have access in correspondence with the lower and/or upper surface of the shelf itself.

The present invention has been described, for illustrative but non-limiting purposes, with reference to various preferred embodiments; it should be understood however that variations and/or modifications can be applied by a skilled person in the field without thereby departing from the relative protection scope, as defined in the enclosed claims.

## Claims

1. A piece of furniture comprising a shelf (100) and shoulders (200) and a shelf-supporting device (10,10') for the reversible connection of said shelf (100) to said shoulders (200), said device being configured for being inserted inside a seat (101) formed within the thickness of said shelf (100) and comprising a main body (12) which is slidingly associated with a connection pin (11) movable between an advanced operating position in which said pin (11) protrudes from said shelf (100) so as to be able to be inserted into a housing seat (201) formed on one of said shoulders (200), and a retracted non-operating position in which said pin (11) does not protrude from said shelf (100) or protrudes so as to be able to be in any case released from said housing seat (201), **characterized in that** said pin (11) is associated with axial movement means (30) of said pin (11) which can be actuated by the user through the magnetic interaction between said movement means (30) and an external actuation device (60), and wherein the axial movement means (30) of said pin (11) comprise a slide (31) slidingly inserted inside a housing seat (13) formed within said main body (12), said slide (31) comprising a seat (31a) housing at least a part or insert (32) made of metallic material or at least one magnet (32').

2. A piece of furniture according to the previous claim, **characterized in that** said axial movement means (30) of said pin (11) comprise at least a part or an insert (32) made of metallic material, suitable for interacting with the magnetic field generated by an external actuation device (60) comprising a magnet.

3. A piece of furniture according to claim 1, **characterized in that** said movement means (30) of said pin (11) comprise at least a part or an insert comprising a magnet (32'), suitable for interacting with the magnetic field generated by an external actuation device made of metallic material (60').

4. A piece of furniture according to the previous claim, **characterized in that** it further comprises elastic means (40) acting between said slide (31) and said main body (12) configured for keeping said pin (11) in said advanced position

5. A piece of furniture according to claim 4, **characterized in that** said elastic means comprise a helical spring (40) acting between said slide (31) and said main body (12) along the axial movement direction of the pin (11).

6. A piece of furniture according to claim 4 or 5, **characterized in that** it further comprises retaining means (50) suitable for keeping said pin (11) in said retracted position against the action of said elastic means (40).

7. A piece of furniture according to the previous claim, **characterized in that** said retaining means (50) can be released by the user by moving said axial movement means (30) of said pin (11).

8. A piece of furniture according to the previous claim, **characterized in that** said retaining means (50) comprise one or more teeth (51) provided on said main body (12) and configured for being inserted into corresponding seats (52) formed on said slide (31).

## Patentansprüche

1. Möbelstück, umfassend ein Regal (100) und Schultern (200) und eine Regalstützvorrichtung (10, 10') zur reversiblen Verbindung des Regals (100) mit den Schultern (200), wobei die Vorrichtung konfiguriert ist, in einen Sitz (101) eingesetzt zu werden, der innerhalb der Dicke des Regals (100) gebildet ist, und umfassend einen Hauptkörper (12), der gleitend einem Verbindungsstift (11) zugeordnet ist, der zwischen einer vorgeschobenen Betriebsposition, in der der Stift (11) aus dem Regal (100) herausragt, sodass er in einen Gehäusesitz (201), der auf einer der Schultern (200) gebildet ist, und einer zurückgeschobenen Nichtbetriebsposition, in der der Stift (11) nicht aus dem Regal (100) herausragt oder herausragt, sodass er in jedem Fall aus dem Gehäusesitz (201) gelöst werden kann, eingesetzt werden kann, **dadurch gekennzeichnet, dass** dem Stift (11) axiale Bewegungsmittel (30) des Stifts (11) zugeordnet sind, die durch den Benutzer durch die magnetische Interaktion zwischen den Bewegungsmitteln (30) und einer externen Betätigungsvorrichtung (60) betätigt werden können, und wobei die axialen Bewegungsmittel (30) des Stifts (11) einen Schieber (31) umfassen, der gleitend in einen Gehäusesitz (13) eingesetzt ist, der innerhalb des Hauptkörpers (12) gebildet ist, der Schieber (31) umfassend einen Sitz (31a), der mindestens einen Teil oder Einsatz (32) aufnimmt, der aus einem metallischen Material oder mindestens einem Magneten (32') hergestellt ist.

2. Möbelstück nach dem vorstehenden Anspruch, **dadurch gekennzeichnet, dass** die axialen Bewegungsmittel (30) des Stifts (11) mindestens einen Teil oder einen Einsatz (32) umfassen, der aus einem metallischen Material hergestellt ist und geeignet ist, mit dem magnetischen Feld zu interagieren, das durch eine externe Betätigungsvorrichtung (60) erzeugt wird, umfassend einen Magneten.

3. Möbelstück nach Anspruch 1, **dadurch gekennzeichnet, dass** die Bewegungsmittel (30) des Stifts (11) mindestens einen Teil oder einen Einsatz umfassen, umfassend einen Magneten (32'), der geeignet ist, mit dem magnetischen Feld zu interagieren, das durch eine externe Betätigungsvorrichtung aus metallischem Material (60') erzeugt wird.

4. Möbelstück nach dem vorstehenden Anspruch, **dadurch gekennzeichnet, dass** es ferner elastische Mittel (40) umfasst, die zwischen dem Schieber (31) und dem Hauptkörper (12) wirken und konfiguriert sind, den Stift (11) in der vorgeschobenen Position zu halten

5. Möbelstück nach Anspruch 4, **dadurch gekennzeichnet, dass** die elastischen Mittel eine Schraubenfeder (40) umfassen, die zwischen dem Schieber (31) und dem Hauptkörper (12) in axialer Bewegungsrichtung des Stiftes (11) wirkt.

6. Möbelstück nach Anspruch 4 oder 5, **dadurch gekennzeichnet, dass** es ferner Haltemittel (50) umfasst, die geeignet sind, den Stift (11) in der zurückgeschobenen Position gegen die Wirkung der elastischen Mittel (40) zu halten.

7. Möbelstück nach dem vorstehenden Anspruch, **dadurch gekennzeichnet, dass** die Haltemittel (50) vom Benutzer durch Bewegen der axialen Bewegungsmittel (30) des Stiftes (11) gelöst werden können.

8. Möbelstück nach dem vorstehenden Anspruch, **dadurch gekennzeichnet, dass** die Haltemittel (50) einen oder mehrere Zähne (51) umfassen, die an dem Hauptkörper (12) vorgesehen und konfiguriert sind, in entsprechende Sitze (52) eingesetzt zu werden, die an dem Schieber (31) gebildet sind.

## Revendications

1. Meuble comprenant une tablette (100) et des épaulements (200) et un dispositif de support de tablette (10, 10') pour la liaison réversible de ladite tablette (100) auxdits épaulements (200), ledit dispositif étant conçu pour être inséré à l'intérieur d'un siège (101) formé à l'intérieur de l'épaisseur de ladite tablette (100) et comprenant un corps principal (12) associé de manière coulissante à une broche de liaison (11) mobile entre une position de fonctionnement avancée dans laquelle ladite broche (11) fait saillie de ladite tablette (100) de manière à pouvoir être insérée dans un siège de logement (201) formé sur l'un desdits épaulements (200), et une position de non fonctionnement rétractée dans laquelle ladite broche (11) ne fait pas saillie de ladite tablette (100) ou fait saillie de manière à pouvoir être en tout cas libérée dudit siège de logement (201), **caractérisé en ce que** ladite broche (11) est associée à des moyens de mouvement axial (30) de ladite broche (11) qui peuvent être actionnés par l'utilisateur par le biais de l'interaction magnétique entre lesdits moyens de mouvement (30) et un dispositif d'actionnement externe (60), et dans lequel les moyens de mouvement axial (30) de ladite broche (11) comprennent une glissière (31) insérée de manière coulissante à l'intérieur d'un siège de logement (13) formé à l'intérieur dudit corps principal (12), ladite glissière (31) comprenant un siège (31a) logeant au moins une partie ou un insert (32) en matériau métallique ou au moins un aimant (32').

2. Meuble selon la revendication précédente, **caractérisé en ce que** lesdits moyens de mouvement axial (30) de ladite broche (11) comprennent au moins une partie ou un insert (32) en matériau métallique, adapté pour interagir avec le champ magnétique généré par un dispositif d'actionnement externe (60) comprenant un aimant.

3. Meuble selon la revendication 1, **caractérisé en ce que** lesdits moyens de mouvement (30) de ladite broche (11) comprennent au moins une partie ou un insert comprenant un aimant (32'), adapté pour interagir avec le champ magnétique généré par un dispositif d'actionnement externe en matériau métallique (60').

4. Meuble selon la revendication précédente, **caractérisé en ce qu'**il comprend en outre des moyens élastiques (40) agissant entre ladite glissière (31) et ledit corps principal (12) conçus pour maintenir ladite broche (11) dans ladite position avancée

5. Meuble selon la revendication 4, **caractérisé en ce que** lesdits moyens élastiques comprennent un ressort hélicoïdal (40) agissant entre ladite glissière (31) et ledit corps principal (12) le long de la direction de mouvement axial de la broche (11).

6. Meuble selon la revendication 4 ou 5, **caractérisé en ce qu'**il comprend en outre des moyens de retenue (50) adaptés pour maintenir ladite broche (11) dans ladite position rétractée contre l'action desdits moyens élastiques (40).

7. Meuble selon la revendication précédente, **caractérisé en ce que** lesdits moyens de retenue (50) peuvent être libérés par l'utilisateur en déplaçant lesdits moyens de mouvement axial (30) de ladite broche (11).

8. Meuble selon la revendication précédente, **caractérisé en ce que** lesdits moyens de retenue (50) comprennent une ou plusieurs dents (51) fournies sur ledit corps principal (12) et conçues pour être insérées dans des sièges correspondants (52) formés sur ladite glissière (31).
